(19) **Europäisches Patentamt / European Patent Office / Office européen des brevets**

(11) **EP 4 383 916 A1**

(12) # EUROPEAN PATENT APPLICATION
published in accordance with Art. 153(4) EPC

(43) Date of publication:
**12.06.2024 Bulletin 2024/24**

(21) Application number: **22851952.6**

(22) Date of filing: **25.07.2022**

(51) International Patent Classification (IPC):
**H04W 74/08** (2009.01)

(52) Cooperative Patent Classification (CPC):
**H04W 24/02; H04W 74/00; H04W 74/08**

(86) International application number:
**PCT/CN2022/107701**

(87) International publication number:
**WO 2023/011238 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.08.2021 CN 202110898462**

(71) Applicant: **China Telecom Corporation Limited Beijing 100033 (CN)**

(72) Inventors:
• **YANG, Bei**
  **Beijing 100033 (CN)**

• **ZHU, Jianchi**
  **Beijing 100033 (CN)**
• **SHE, Xiaoming**
  **Beijing 100033 (CN)**
• **XIE, Weiliang**
  **Beijing 100033 (CN)**
• **WANG, Qingyang**
  **Beijing 100033 (CN)**

(74) Representative: **Petraz, Gilberto Luigi et al**
  **GLP S.r.l.**
  **Viale Europa Unita, 171**
  **33100 Udine (IT)**

(54) **RANDOM ACCESS RESOURCE ISOLATION METHOD FOR ACCESS NETWORK SLICE, AND DEVICE AND MEDIUM**

(57) The embodiments of the present disclosure provides a random access resource isolation method for radio access network slicing, a network equipment, a terminal device, an electronic device and a computer readable medium. The method includes: a terminal device receiving random access configuration information sent by a network equipment, the random access configuration information including information indicating that the random access resources are used for slice-based random access and/or common random access.

```
        ┌─110                           ┌─120
   ┌──────────────┐               ┌──────────────┐
   │   Network    │               │   Terminal   │
   │  Equipment   │               │    Device    │
   └──────────────┘               └──────────────┘
        │   S210.Random Access Configuration Information   │
        │ ──────────────────────────────────────────────► │
        │                               ┌──────────────────────────────┐
        │                               │ S220.Determining Random Access│
        │                               │ Resources to be Used Based on  │
        │                               │ Relevant Parameters and the Random│
        │                               │ Access Configuration Information│
        │                               └──────────────────────────────┘
        │                               ┌──────────────────────────────┐
        │                               │ S230. Initiating a Random Access│
        │                               │ Request Based on the Random    │
        │                               │ Access Resources to be Used    │
        │                               └──────────────────────────────┘
```

Fig. 2

**Description**

**CROSS-REFERENCE TO RELATED APPLICATIONS**

This disclosure is based upon and claims priority to Chinese Patent Application No. 202110898462.X, named as "A random access resource isolation method for radio access network slicing, a device and a medium", filed August 5, 2021 the entire contents of which are incorporated herein by reference.

**TECHNICAL FIELD**

The present disclosure relates to the field of communication technology, and more particularly, to a random access resource isolation method for radio access network slicing, a network equipment, a terminal device, an electronic device and a computer readable medium.

**BACKGROUND**

5G network slicing can provide differentiated services for users with different service requirements, meeting the needs of highly differentiated 5G vertical application scenarios.

At present, the standardization work item for RAN (Radio Access Network) slicing is being carried out, including the definition of RA (Random Access) mechanism based on RAN slicing. When defining the random access mechanism of RAN slicing, it is necessary to configure slice-based random access resources and common random access resources.

It is worth noting that the information disclosed in the background technology section above is only used to enhance the understanding of the background of the disclosure and therefore may include information that does not constitute prior art known to one skilled in the art.

**SUMMARY**

The aim of the embodiments of the present disclosure is to provide a random access resource isolation method for radio access network slicing, a network equipment, a terminal device, an electronic device and a computer readable medium.

Other features and advantages of the present disclosure will become apparent through the detailed description below or will be partially learned through the practice of the present disclosure.

According to a first aspect of embodiments of the present disclosure, there is provided a random access resources isolation method for radio access network slicing, including: a terminal device receiving random access configuration information sent by a network equipment, the random access configuration information including information indicating that the random access resources are used for slice-based random access and/or common random access.

According to the first aspect, in some exemplary embodiments, the method further includes: the terminal device determining random access resources to be used based on relevant parameters and the random access configuration information; the terminal device initiating a random access request based on the random access resources to be used.

According to the first aspect, in some exemplary embodiments, the relevant parameters include: at least one of single network slice selection assistance information S-NSSAI, slice group and no slicing related configuration information.

According to the first aspect, in some exemplary embodiments, the slice group may be determined in one of the following ways: the network equipment notifying the terminal device of the relationship between S-NSSAI and slice group through non-access stratum NAS signaling; using slice/service type SST as slice group; or, using user access control UAC as slice group.

According to the first aspect, in some exemplary embodiments, the random access configuration information includes information indicating that the random access resources are used for the slice-based random access resources and/or the common random access resources, the slice-based random access resources and the common random access resources using shared random access occasions RO, as well as preambles of the slice-based random access resources and preambles of the common random access resources are various.

According to the first aspect, in some exemplary embodiments, the random access configuration information further includes: preambles associated with the slice-based random access resources and/or preambles associated with the common random access resources.

According to the first aspect, in some exemplary embodiments, the common random access resources are corresponding to: R contention based preambles for a common 4-step random access and/or Q contention based preambles for a common 2-step random access; the slice-based random access resources are corresponding to: R1 contention based 4-step random access preambles for network slice and/or Q1 contention based 2-step random access preambles for network slice.

According to the first aspect, in some exemplary embodiments, when N<1, a synchronous signal/PBCH block SSB is mapped to 1/N random access occasions RO, and the R preambles are with consecutive indices started from preamble index 0; the Q preambles are with consecutive indices started from preamble index R, the R1 preambles are with consecutive indices started from preamble index R+Q, and the Q1 preambles are with consecutive indices started from preamble index R+Q+R1;

when N>=1, a SSB is mapped to 1/N random access occasions RO, and the R preambles are with consecutive indices started from preamble index $n \cdot N_{preamble}^{total} / N$;
the Q preambles are with consecutive indices started
from preamble index $n \cdot N_{preamble}^{total} / N + R$, the R1 preambles are with consecutive indices started from preamble index $n \cdot N_{preamble}^{total} / N + R + Q$, and the Q1 preambles are with consecutive indices started from preamble index $n \cdot N_{preamble}^{total} / N$ +R+Q+R1, where $N_{preamble}^{total}$ represents a total number of available preambles for random access, $0 \le n \le N - 1$.

According to the first aspect, in some exemplary embodiments, the random access configuration information includes information indicating that the random access resources are for the slice-based random access resources and/or the common random access resources, the slice-based random access resources and the common random access resources using shared preambles, a relationship between random access occasions RO of the slice-based random access resources and random access occasions RO of the common random access resources being one of the following: the slice-based random access resources and the common random access resources using time division random access occasions RO; the slice-based random access resources and the common random access resources using frequency division random access occasions RO; or, the slice-based random access resources and the common random access resources using frequency division and time division random access occasions RO.

According to the first aspect, in some exemplary embodiments, the random access configuration information includes information indicating that the random access resources are used for the slice-based random access resources and/or the common random access resources, a part of the slice-based random access resources and/or a part of the common random access resources using shared random access occasions RO, and the part of the slice-based random access resources and/or the part of the common random access resources using various preambles; another part of the slice-based random access resources and/or another part of the common random access resources using different random access occasions RO, and the another part of the slice-based random access resources and/or the another part of the common random access resources using shared preambles.

According to a second aspect of embodiments of the present disclosure, there is provided a random access resources isolation method for radio access network slicing, including: a network equipment sending random access configuration information, the random access configuration information being configuration information for random access resources of at least one cell, the random access configuration information comprising information indicating that the random access resources are used for slice-based random access and/or common random access.

According to the second aspect, in some exemplary embodiments, the random access configuration information is used for a terminal device located in the cell to determine random access resources to be used based on slice related parameters and the random access configuration information.

According to the second aspect, in some exemplary embodiments, the slice related parameters include: at least one of single network slice selection assistance information S-NSSAI, slice group and no slicing related configuration information.

According to the second aspect, in some exemplary embodiments, the slice group may be determined in one of the following ways: the network equipment notifying the terminal device of the relationship between S-NSSAI and slice group through non-access stratum NAS signaling; using slice/service type SST as slice group; or using user access control UAC as slice group.

According to the second aspect, in some exemplary embodiments, the random access configuration information includes information indicating that the random access resources are used for the slice-based random access resources and/or the common random access resources, the slice-based random access resources and the common random access resources using shared random access occasions RO, as well as preambles of the slice-based random access resources and preambles of the common random access resources are various.

According to the second aspect, in some exemplary embodiments, the random access configuration information further includes: preambles associated with the slice-based random access resources and/or preambles associated with the common random access resources.

According to the second aspect, in some exemplary embodiments, the common random access resources are corresponding to: R contention based preambles for a common 4-step random access and/or Q contention based preambles for a common 2-step random access; the slice-based random access resources are corresponding to: R1 contention based 4-step random access preambles for network slice and/or Q1 contention based 2-step random access preambles for network slice.

According to the second aspect, in some exemplary embodiments, when N<1, a synchronous signal/PBCH block SSB is mapped to 1/N random access occasions RO, and the R preambles are with consecutive indices started from preamble index 0; the Q preambles are with consecutive indices started from preamble index R, the R1 preambles are with consecutive indices started from preamble index R+Q, and the Q1 preambles are with consecutive indices started from preamble index R+Q+R1;

when N>=1, a SSB is mapped to 1/N random access occasions RO, and the R preambles are with consecutive indices started from preamble index $n \cdot N_{preamble}^{total} / N$ ;

the Q preambles are with consecutive indices started from preamble index $n \cdot N_{preamble}^{total} / N + R$ , and the R1 preambles are with consecutive indices started from preamble index $n \cdot N_{preamble}^{total} / N + R + Q$ , the Q1 preambles are with consecutive indices started from preamble index $n \cdot N_{preamble}^{total} / N + R + Q + R1$, where $N_{preamble}^{total}$ represents a total number of available preambles for random access, $0 \le n \le N - 1$.

According to the second aspect, in some exemplary embodiments, the random access configuration information includes information indicating that the random access resources are for the slice-based random access resources and/or the common random access resources, the slice-based random access resources and the common random access resources using shared preambles, a relationship between random access occasions RO of the slice-based random access resources and random access occasions RO of the common random access resources being one of the following: the slice-based random access resources and the common random access resources using time division random access occasions RO; the slice-based random access resources and the common random access resources using frequency division random access occasions RO; or, the slice-based random access resources and the common random access resources using frequency division and time division random access occasions RO.

According to the second aspect, in some exemplary embodiments, the random access configuration information includes information indicating that the random access resources are used for the slice-based random access resources and/or the common random access resources, a part of the slice-based random access resources and/or a part of the common random access resources using shared random access occasions RO, and the part of the slice-based random access resources and/or the part of the common random access resources using various preambles;

another part of the slice-based random access resources and/or another part of the common random access resources using different random access occasions RO, and the another part of the slice-based random access resources and/or the another part of the common random access resources using shared preambles.

According to a third aspect of embodiments of the present disclosure, there is provided a terminal device, including: receiving module, configured to receive random access configuration information sent by a network equipment, the random access configuration information being configuration information for random access resources of a cell where the terminal device is located, the random access configuration information including information indicating that the random access resources are used for slice-based random access and/or common random access.

According to the third aspect, in some exemplary embodiments, the terminal device further includes: access processing module, configured to determine random access resources to be used based on relevant parameters and the random access configuration information; initiate a random access request based on the random access resources to be used.

According to the third aspect, in some exemplary embodiments, the relevant parameters include: at least one of single network slice selection assistance information S-NSSAI, slice group and no slicing related configuration information.

According to the third aspect, in some exemplary embodiments, the slice group may be determined in one of the following ways: notifying, by the network equipment, the terminal device of the relationship between S-NSSAI and slice group through non-access stratum NAS signaling; using slice/service type SST as slice group; or, using user access control UAC as slice group.

According to the third aspect, in some exemplary embodiments, the random access configuration information includes information indicating that the random access resources are used for the slice-based random access resources and/or the common random access resources, the slice-based random access resources and the common random access resources using shared random access occasions RO, as well as preambles of the slice-based random access resources and preambles of the common random access resources are various.

According to the third aspect, in some exemplary embodiments, the random access configuration information further includes: preambles associated with the slice-based random access resources and/or preambles associated with the common random access resources.

According to the third aspect, in some exemplary embodiments, the common random access resources are corresponding to: R contention based preambles for a common 4-step random access and/or Q contention based preambles for a common 2-step random access; the slice-based random access resources are corresponding to: R1 contention based 4-step random access preambles for network slice and/or Q1 contention based 2-step random access preambles for network slice.

According to the third aspect, in some exemplary embodiments, when N<1, a synchronous signal/PBCH block SSB is mapped to 1/N random access occasions RO, and the R preambles are with consecutive indices started from preamble index 0; the Q preambles are with consecutive indices started from preamble index R, the R1 preambles are with consecutive indices started from preamble index R+Q, and the Q1 preambles are with consecutive indices started from preamble index R+Q+R1;

when N>=1, a SSB is mapped to 1/N random access occasions RO, and the R preambles are with consecutive indices started from preamble index $n \cdot N_{preamble}^{total}/N$;

the Q preambles are with consecutive indices started from preamble index $n \cdot N_{preamble}^{total}/N + R$, the R1 preambles are with consecutive indices started from preamble index $n \cdot N_{preamble}^{total}/N + R + Q$, and the Q1 preambles are with consecutive indices started from preamble index $n \cdot N_{preamble}^{total}/N$ +R+Q+R1, where $N_{preamble}^{total}$ represents a total number of available preambles for random access, $0 \le n \le N - 1$.

According to the third aspect, in some exemplary embodiments, the random access configuration information includes information indicating that the random access resources are for the slice-based random access resources and/or the common random access resources, the slice-based random access resources and the common random access resources using shared preambles, a relationship between random access occasions RO of the slice-based random access resources and random access occasions RO of the common random access resources being one of the following: the slice-based random access resources and the common random access resources using time division random access occasions RO; the slice-based random access resources and the common random access resources using frequency division random access occasions RO; or, the slice-based random access resources and the common random access resources using frequency division and time division random access occasions RO.

According to the third aspect, in some exemplary embodiments, the random access configuration information includes information indicating that the random access resources are used for the slice-based random access resources and/or the common random access resources, a part of the slice-based random access resources and/or a part of the common random access resources using shared random access occasions RO, and the part of the slice-based random access resources and/or the part of the common random access resources using various preambles; another part of the slice-based random access resources and/or another part of the common random access resources using different random access occasions RO, and the another part of the slice-based random access resources and/or the another part of the common random access resources using shared preambles.

According to a fourth aspect of embodiments of the present disclosure, there is provided a network equipment, including: configuration information sending module, configured to send random access configuration information, the random access configuration information being configuration information for random access resources of at least one cell, the random access configuration information including information indicating that the random access resources are used for slice-based random access and/or common random access.

According to the fourth aspect, in some exemplary embodiments, the random access configuration information is used for a terminal device located in the cell to determine random access resources to be used based on slice related parameters and the random access configuration information.

According to the fourth aspect, in some exemplary embodiments, the slice related parameters include: at least one of single network slice selection assistance information S-NSSAI, slice group and no slicing related configuration information.

According to the fourth aspect, in some exemplary embodiments, the slice group may be determined in one of the following ways: the network equipment notifying the terminal device of the relationship between S-NSSAI and slice group through non-access stratum NAS signaling; using slice/service type SST as slice group; or, using user access control UAC as slice group.

According to the fourth aspect, in some exemplary embodiments, the random access configuration information includes information indicating that the random access resources are used for the slice-based random access resources and/or the common random access resources, the slice-based random access resources and the common random access resources using shared random access occasions RO, as well as preambles of the slice-based random access resources and preambles of the common random access resources are various.

According to the fourth aspect, in some exemplary embodiments, the random access configuration information further includes: preambles associated with the slice-based random access resources and/or preambles associated with the common random access resources.

According to the fourth aspect, in some exemplary embodiments, the common random access resources are corresponding to: R contention based preambles for a common 4-step random access and/or Q contention based preambles for a common 2-step random access; the slice-based random access resources are corresponding to: R1 contention based 4-step random access preambles for network slice and/or Q1 contention based 2-step random access preambles for network slice.

According to the fourth aspect, in some exemplary embodiments, when N<1, a synchronous signal/PBCH block SSB is mapped to 1/N random access occasions RO, and the R preambles are with consecutive indices started from preamble index 0; the Q preambles are with consecutive indices started from preamble index R, the R1 preambles are with consecutive indices started from preamble index R+Q, and the Q1 preambles are with consecutive indices started from preamble index R+Q+R1;

when N>=1, a SSB is mapped to 1/N random access occasions RO, and the R preambles are with consecutive indices started from preamble index $n \cdot N_{preamble}^{total} / N$ ; the Q preambles are with consecutive indices started from preamble index $n \cdot N_{preamble}^{total} / N$+R , and the R1 preambles are with consecutive indices started from pre-

amble index $n \cdot N_{preamble}^{total} / N$+R+Q , the Q1 preambles are with consecutive indices started from preamble

index $n \cdot N_{preamble}^{total} / N$ +R+Q+R1, where

$N_{preamble}^{total}$ represents a total number of available preambles for random access, $0 \le n \le N - 1$.

According to the fourth aspect, in some exemplary embodiments, the random access configuration information includes information indicating that the random access resources are for the slice-based random access resources and/or the common random access resources, the slice-based random access resources and the common random access resources using shared preambles, a relationship between random access occasions RO of the slice-based random access resources and random access occasions RO of the common random access resources being one of the following: the slice-based random access resources and the common random access resources using time division random access occasions RO; the slice-based random access resources and the common random access resources using frequency division random access occasions RO; or, the slice-based random access resources and the common random access resources using frequency division and time division random access occasions RO.

According to the fourth aspect, in some exemplary embodiments, the random access configuration information includes information indicating that the random access resources are used for the slice-based random access resources and/or the common random access resources, a part of the slice-based random access resources and/or a part of the common random access resources using shared random access occasions RO, and the part of the slice-based random access resources and/or the part of the common random access resources using various preambles; another part of the slice-based random access resources and/or another part of the common random access resources using different random access occasions RO, and the another part of the slice-based random access resources and/or the another part of the common random access resources using shared preambles.

According to a fifth aspect of embodiments of the present disclosure, there is provided a computer readable medium, with computer programs stored on, which are executed by a processor, making the programs able to execute a random access resources isolation method as described in the first aspect of the embodiments above.

According to a sixth aspect of embodiments of the present disclosure, there is provided an electronic device, including: one or more processors; a memory for storing one or more programs, when the executable one or more programs are executed by the processor, making the one or more processors able to execute a random access resources isolation method as described in the first aspect of the embodiments above.

It is to be understood that both the foregoing general description and the following detailed description are exemplary and explanatory only and are not restrictive of the present disclosure.

## BRIEF DESCRIPTION OF THE DRAWINGS

The accompanying drawings, which are incorporated in and constitute a part of this specification, illustrate embodiments consistent with the invention and, together with the description, serve to explain the principles of the invention. It is evident that the drawings in the description below are only some embodiments of the disclosure, and that other drawings may be obtained from them without creative effort by one skilled in the art. In the drawings:

Fig. 1 shows a schematic diagram of an application scenario of a random access resource isolation method for radio access network slicing in an exemplary embodiment of the present disclosure;

Fig. 2 shows a flow chart of a random access resource isolation method for radio access network slicing according to some exemplary embodiments of the present disclosure;

Fig. 3 shows a schematic diagram of preambles under shared RO schemes according to some exemplary embodiments of the present disclosure;

Fig. 4 shows a schematic diagram of ROs corresponding to slice-based RA resources and common RA resources being frequency division according to some exemplary embodiments of the present disclosure;

Fig. 5 shows a schematic diagram of ROs corresponding to slice-based RA resources and common RA resources being time division according to some exemplary embodiments of the present disclosure;

Fig. 6 shows a schematic diagram of ROs corresponding to slice-based RA resources and common RA resources being time division and frequency division according to some exemplary embodiments of the present disclosure;

Fig. 7 shows a schematic diagram of a hybrid scheme with shared RO and no shared RO according to some exemplary embodiments of the present disclosure;

Fig. 8 shows a schematic diagram of structures of a terminal device according to some exemplary embodiments of the present disclosure;

Fig. 9 shows a schematic diagram of structures of a network equipment according to some exemplary embodiments of the present disclosure;

Fig. 10 shows a schematic diagram of an electronic device in an exemplary embodiment of the present disclosure.

## DETAILED DESCRIPTION

Reference will now be made in detail to exemplary embodiments, examples of which are illustrated in the accompanying drawings. However, exemplary embodiments can be implemented in a variety of forms and should not be understood to be limited to the examples described herein; rather, the provision of these embodiments makes the disclosure more comprehensive and complete and communicates the concept of exemplary embodiments to one skilled in the art in a comprehensive manner.

Furthermore, the features, structures or characteristics described may be combined in one or more embodiments in any appropriate manner. In the description below, many specific details are provided to give a full understanding of the embodiments of the present disclosure. However, one skilled in the art will realize that technical solutions of the present disclosure may be practiced without one or more of the specific details, or that other methods, components, devices, steps, etc. may be employed. In other cases, no well-known methods, devices, realizations, or operations are shown or described in detail to avoid obscuring aspects of the present disclosure.

The block diagrams shown in the accompanying drawings are merely functional entities and do not necessarily correspond to physically independent entities. That is, these functional entities may be implemented in software form, or in one or more hardware modules or integrated circuits, or in different networks and/or processor devices and/or microcontroller devices.

The flow charts shown in the accompanying drawings are merely for illustration and does not necessarily include all contents and operations/steps, or be executed in the described order. For example, some operations/steps may be decomposed, while some operations/steps may be combined or partially combined, so the actual execution order may vary according to the actual situation.

The technical solutions in the exemplary embodiments of the present disclosure will be explained in detail below with the accompanying drawings.

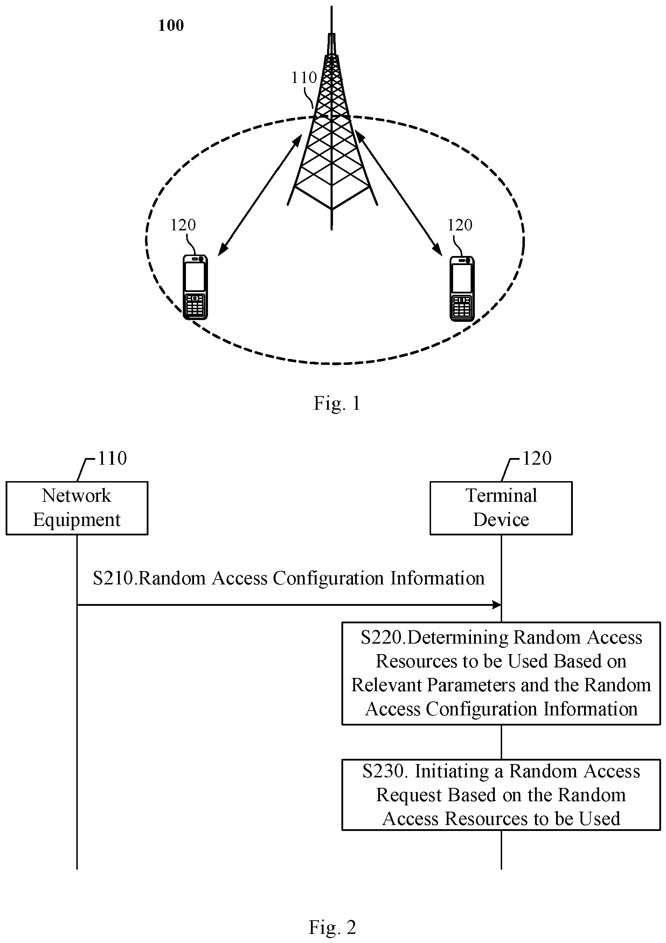

Fig. 1 shows a schematic diagram of an application scenario of a random access resource isolation method for radio access network slicing in an exemplary embodiment of the present disclosure.

As shown in Fig. 1, the application scenario 100 may include a network equipment 110, which may be a device communicating with a terminal device 120 (or a communication terminal, a user terminal). The network equipment 110 may provide communication coverage for specific geographical areas and may communicate with terminal devices located in the coverage area. Optionally, the network equipment 110 may be an evolutional base station (Evolutional Node B, eNB or eNodeB) in an LTE system, or a network equipment in a 5G network, such as a base station.

The application scenario 100 also includes at least one terminal device 120 located within the coverage range of the network equipment 110. The terminal device 120 is a user terminal in a 4G radio access network or a 5G radio access network. It is worth noting that the terminal device 120 may be a portable computer, a smart phone, an on-board terminal and a tablet computer.

Further, in exemplary embodiments, terminal device 120 receives random access configuration information sent by network equipment 110, with the random access configuration information being configuration information for random access resources of the cell where terminal device 120 is located, the random access configuration information including information indicating that the random access resources of the cell where terminal device 120 is located are used for slice-based random access and/or common random access. That is, the random access configuration information may include information indicating that the random access resources of the cell where terminal device 120 is located are used for slice-based random access; the random access configuration information may also include information indicating that the random access resources of the cell where terminal device 120 is located are used for slice-based random access and common random access; the random access configuration information may also include information indicating that the random access resources of the cell where terminal device 120 is located are used for common random access.

For example, the random access configuration information may also include information indicating that the random access resources of the cell where terminal device 120 is located are used for slice 1 and/or slice 2; the random access configuration information may also include information indicating that the random access resources of the cell where terminal device 120 is located are used for slice 1 and common random access; when no slice is defined in the random access configuration information or when it is special value 0, the random access configuration information indicates that the random access resources of the cell where terminal device 120 is located are used for common random access.

According to the technical solution in the example embodiment, on one hand, random access configuration information is broadcast through network equipments such as base stations, which is used to indicate the relationship between random access resources and slice/slice group/common random access, so that soft isolation or hard isolation of slice-based random access resources and common random access resources can be flexibly realized through random access configuration information to adapt to dynamic changes of different slice service requirements and network service loads; on another hand, the soft isolation of slice-based random access resources and common random access resources can reduce the fragmentation of random access resources, and can provide following transmission of slice-based QoS(Quality of Service)/QoE(Quality of Experience) services at the same time, and the hard isolation of slice-based random access resources and common random access resources can provide better random access resource configuration for radio access network slicing to meet the needs of various customers.

Fig. 2 shows a flow chart of a random access resource isolation method for radio access network slicing according to some exemplary embodiments of the present disclosure. The implementation subject of the random access resource isolation method for radio access network slicing provided by the present disclosure embodiments may be a terminal device with computing capability, such as terminal device 120 in Fig. 1. The random access resource isolation method for radio access network slicing includes step S210. The random access resource isolation method for radio access network slicing in the exemplary embodiments is described in detail below with the accompanying drawings.

As shown in Fig. 2, in step S210, a terminal device receives random access configuration information sent by a network equipment, with the random access configuration information including information indicating that the random access resources are used for slice-based random access and/or common random access.

In exemplary embodiments, network equipment 110 send random access configuration information, with the random access configuration information being configuration information for random access resources of at least one cell. Terminal device 120 receives the random access configuration information sent by network equipment 110, with the random access configuration information including information indicating that random access resources are used for slice-based random access and/or common random access.

Taking network equipment 110 as a base station as an example, base station 110 broadcasts random access configuration information, with adding information elements to the random access configuration information broadcast (e.g. RACH-ConfigCommon, RACH-ConfigCommonTwoStepRA, RACH-ConfigDedicated). The added information elements are used to indicate slice/slice group/common random access which the random access resources can be used for, so as to realize soft or hard isolation of random access resources.

In the following, several exemplary embodiments are given to explain the random access configuration information in detail.

Embodiment one:
the random access configuration information includes information indicating that the random access resources are used for slice 1 and/or slice 2, or when the information is not defined in the random access configuration information broadcast, e.g. no new information element is added or the value of the newly added information element is the special value 0, the random access configuration information indicates that the random access resources may be used for common random access.

Embodiment two:
the random access configuration information includes information indicating that the random access resources are used for slice 1 and common random access, so as to realize soft isolation of random access resources.

Embodiment three:
the random access configuration information includes information indicating that the random access resources are merely used for target slice/slice group such as slice 1/slice group 1, so as to realize hard isolation of random access resources.

In step S220, the terminal device determines random access resources to be used based on relevant parameters and the random access configuration information.

In exemplary embodiments, the relevant parameters may be slice configuration related parameters. The relevant parameters may include: at least one of S-NSSAI (Single Network Slice Selection Assistance Information), slice group and no slicing related configuration information. Taking the relevant parameters as the parameters of slices or slice groups as an example, the terminal device selects the corresponding random access resource as the applicable random resource from the random access resources indicated in the random access configuration information according to the parameters of slices or slice groups.

For example, if the parameter of slice or slice group is 1, which means slice 1 or slice group 1, the terminal device selects the corresponding random access resource as the applicable random resource from slice-based random access resources according to slice 1 or slice group 1.

Further, the slice group may be determined in one of the following ways: a network equipment such as a core network equipment notifying the terminal device of the relationship between S-NSSAI and slice group through NAS(Non Access Stratum) signaling; using SST(Slice/Service type) as slice group; using UAC(UE Access Control) as slice group. For example, the network equipment notifies the terminal device through NAS signaling of the following relationship between S-NSSAI and slice group: that S-NSSAI equals 1, 2, and 3 associated with slice group 1, and that S-NSSAI equals 4, 5, and 6 associated with slice group 2.

In step S230, the terminal device initiates a random access request based on the random access resources to be used.

In some exemplary embodiments, terminal device 120 initiates random access to network equipment 110 based on the random access resources to be used determined based on the relevant parameters and the random access configuration information.

According to the technical solution in the example embodiment of Fig.2, on one hand, random access configuration information is broadcast through network equipments such as base stations, which is used to indicate the relationship between random access resources and slice/slice group/common random access, so that soft isolation or hard isolation of slice-based random access resources and common random access resources can be flexibly realized through random access configuration information to adapt to dynamic changes of different slice service requirements and network service loads; on another hand, the soft isolation of slice-based random access resources and common random access resources can reduce the fragmentation of random access resources, and can provide following transmission of slice-based QoS(Quality of Service)/QoE(Quality of Experience) services at the same time, and the hard isolation of slice-based random access resources and common random access resources can provide better random access resource configuration for radio access network slicing to meet the needs of various customers.

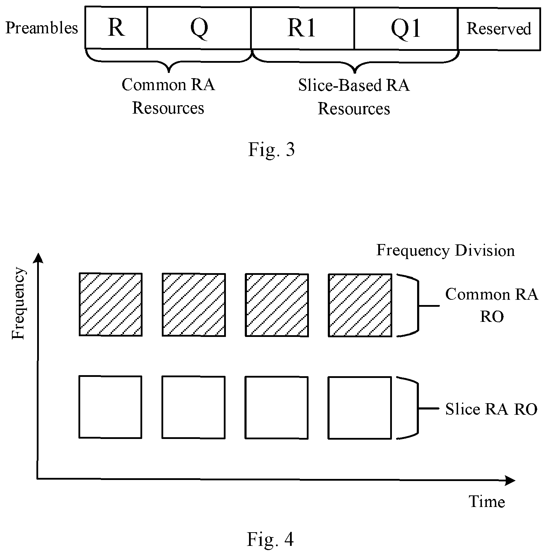

In the following, the exemplary embodiments of the present disclosure are explained in detail through several specific embodiments in combination with the accompanying drawings Fig. 3 to Fig. 7.

Embodiment one: shared RO(Random Access Channel Occasion) schemes

In the exemplary embodiment, the random access configuration information includes information indicating that the random access resources are used for the slice-based random access resources and/or the common random access resources, with the slice-based random access resources and the common random access resources using shared RO, as well as preambles of the slice-based random access resources and preambles of the common random access resources are various configurations.

In the present exemplary embodiment, the random access configuration information includes: preambles associated with the slice-based random access resources and/or preambles associated with the common random access resources.

Fig. 3 shows a schematic diagram of preambles under shared RO schemes according to some exemplary embodiments of the present disclosure. Specifically, as shown in Fig. 3, the common RA resource corresponds to: 1) the number of the preambles for contention based common 4-step random access is R; and/or, 2) the number of the preambles for contention based common 2-step random access is Q,

the slice-based RA resource corresponds to: 3) the number of the preambles for contention based 4-step random access for network slice is R1; and/or, 2) the number of the preambles for contention based 2-step random access for network slice is Q1.

Further, in exemplary embodiments, when N<1, a synchronous signal/PBCH block SSB is mapped to 1/N random access occasions RO, and the R preambles are with consecutive indices started from preamble index 0; the Q preambles are with consecutive indices started from preamble index R, the R1 preambles are with consecutive indices started from preamble index R+Q, and the Q1 preambles are with consecutive indices started from preamble index R+Q+R1.

when N>=1, a SSB is mapped to 1/N random access occasions RO, and the R preambles are with consecutive indices started from preamble index $n \cdot N_{preamble}^{total}\big/N$ ; the Q preambles are with consecutive indices started from preamble index $n \cdot N_{preamble}^{total}\big/N+\text{R}$ , and the R1 preambles are with consecutive indices started from preamble index $n \cdot N_{preamble}^{total}\big/N+\text{R}+\text{Q}$ , the Q1 preambles are with consecutive indices started from preamble index $n \cdot N_{preamble}^{total}\big/N+\text{R}+\text{Q}+\text{R1}$, where $N_{preamble}^{total}$ represents the total number of available preambles for random access, $0 \leq n \leq N-1$.

According to the technical solution in the example embodiment, slice-based RA resources and common RA resources are distinguished by various preamble configurations on the same random access occasions RO, which thereby can provide more transmission opportunities for slice/slice group service and reduce time delay.

Embodiment two: not shared RO (Random Access Channel Occasion) schemes

In the exemplary embodiment, the random access configuration information includes information indicating that the random access resources are used for the slice-based random access resources and/or the common random access resources, the slice-based random access resources and the common random access resources and the common random access resources using shared preambles, a relationship between random access occasions RO of the slice-based random access resources and random access occasions RO of the common random access resources being one of the following:

the slice-based random access resources and the common random access resources using time division random access occasions RO; the slice-based random access resources and the common random access resources using frequency division random access occasions RO; or, the slice-based random access resources and the common random access resources using frequency division and time division random access occasions RO.

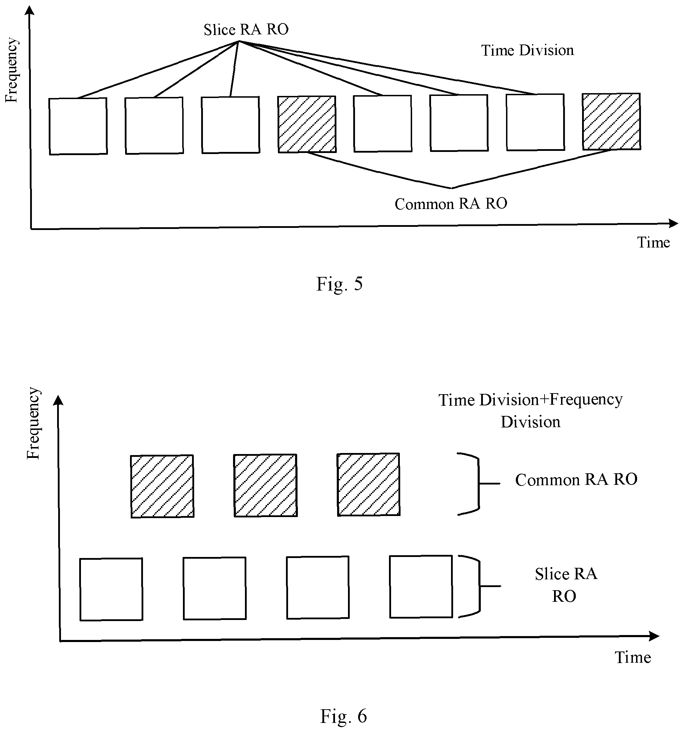

As shown in Fig. 4, the ROs associated with the slice-based random access resources and the ROs associated with the common random access resources associated with are divided according to frequency in the time domain and frequency domain. As shown in Fig. 5, the ROs associated with the slice-based random access resources and the ROs associated with the common random access resources associated with are divided according to time in the time domain and frequency domain. As shown in Fig. 6, the ROs associated with the slice-based random access resources and the ROs associated with the common random access resources associated with are divided according to both the time and the frequency in the time domain and frequency domain, that is, time division and frequency division.

According to the technical solution in the example embodiment, slice-based RA resources and common RA resources use different ROs and the shared preambles, thereby the probability of random access collision can be reduced and the access success rate can be improved.

Embodiment three: an embodiment of hybrid schemes

In the exemplary embodiment, the random access configuration information includes information indicating that the random access resources are used for the slice-based random access resources and/or the common random access resources, a part of the slice-based random access resources and/or a part of the common random access resources using shared random access occasions RO and using various preamble configurations; another part of the slice-based random access resources and/or another part of the common random access resources using different random access occasions RO and shared preambles.

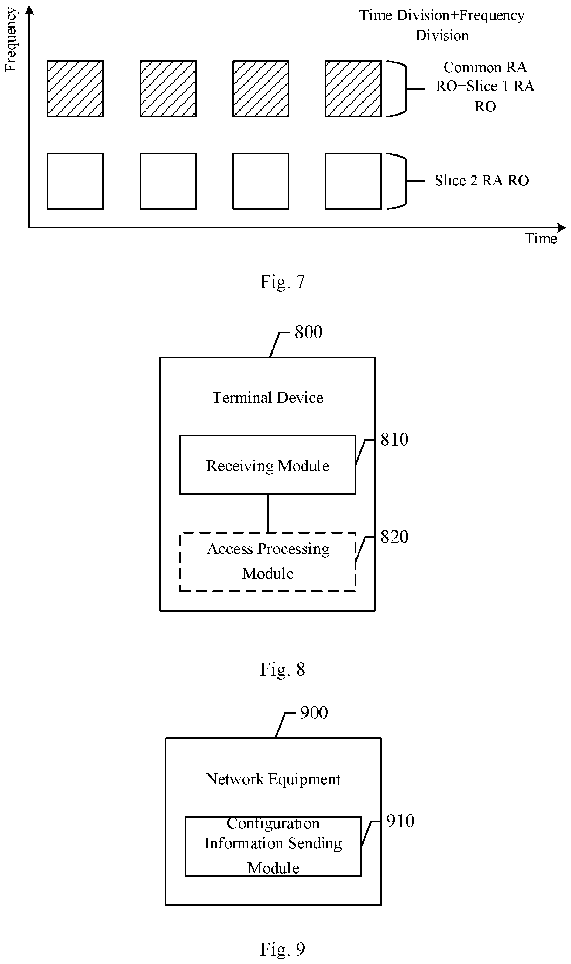

As shown in Fig. 7, the common RA resources and slice 1 RA resources use the same ROs and use various preamble configurations; slice 2 RA resources and the common RA + slice-1 RA resources use different ROs and use the same preambles.

According to the technical solution in the example embodiment, a part of slice-based RA resources and a part of common RA resources use same ROs and are differentiated by using various preamble configurations, and another part uses different ROs and uses shared preambles. By flexibly configuring ROs and preambles of slice-based RA resources and common RA resources, network loads and the needs of various service can be better adapted.

It should be noted that the above-mentioned accompanying drawings are only schematic descriptions of the processes included in the methods according to the exemplary embodiments of the present disclosure and are yet not intended to be limiting. It is easy to understand that the processes shown in the above-mentioned accompanying drawings do not indicate or limit the chronological order of these processes. In addition, it is also easy to understand that these processes can be executed synchronously or asynchronously, for example, in multiple modules.

The following describes an device embodiment of the present disclosure, which may be used to implement the above-mentioned random access resources isolation method for the radio access network slicing of the present disclosure.

Fig. 8 shows a schematic diagram of structures of a terminal device according to an embodiment of the present disclosure.

As shown in Fig. 8, terminal device 800 includes: receiving module 810, configured to receive random access configuration information sent by a network equipment, the random access configuration information being configuration information for random access resources of a cell where the terminal device is located, the random access configuration information including information indicating that the random access resources are used for slice-based random access and/or common random access.

In some exemplary embodiments, the terminal device 800 further includes: access processing module 820, configured to determine random access resources to be used based on relevant parameters and the random access configuration information; initiate a random access request based on the random access resources to be used.

In some exemplary embodiments, the relevant parameters include: at least one of single network slice selection assistance information S-NSSAI, slice group and no slicing related configuration information.

In some exemplary embodiments, the slice group may be determined in one of the following ways: the network equipment notifying the terminal device of the relationship between S-NSSAI and slice group through non-access stratum NAS signaling; using slice/service type SST as slice group; or, using user access control UAC as slice group.

In some exemplary embodiments, the random access configuration information includes information indicating that the random access resources are used for the slice-based random access resources and/or the common random access resources, the slice-based random access resources and the common random access resources using shared random access occasions RO, as well as preambles of the slice-based random access resources and preambles of the common random access resources are various.

In some exemplary embodiments, the random access configuration information further includes: preambles associated with the slice-based random access resources and/or preambles associated with the common random access resources.

In some exemplary embodiments, the common random access resources are corresponding to: R contention based preambles for a common 4-step random access and/or Q contention based preambles for a common 2-step random access; the slice-based random access resources are corresponding to: R1 contention based 4-step random access preambles for network slice and/or Q1 contention based 2-step random access preambles for network slice.

In some exemplary embodiments, when N<1, a synchronous signal/PBCH block SSB is mapped to 1/N random access occasions RO, and the R preambles are with consecutive indices started from preamble index 0; the Q preambles are with consecutive indices started from preamble index R, the R1 preambles are with consecutive indices started from preamble index R+Q, and the Q1 preambles are with consecutive indices started from preamble index R+Q+R1;

when N>=1, a SSB is mapped to 1/N random access occasions RO, and the R preambles are with consecutive indices started from preamble index $n \cdot N^{total}_{preamble} \big/ N$;

the Q preambles are with consecutive indices started from preamble index $n \cdot N^{total}_{preamble} \big/ N + R$, and the R1 preambles are with consecutive indices started from preamble index $n \cdot N^{total}_{preamble} \big/ N + R + Q$, the Q1 preambles are with consecutive indices started from preamble index $n \cdot N^{total}_{preamble} \big/ N$ +R+Q+R1, where $N^{total}_{preamble}$ represents a total number of available preambles for random access, $0 \leq n \leq N - 1$.

In some exemplary embodiments, the random access configuration information includes information indicating that the random access resources are for the slice-based random access resources and/or the common random access resources, the slice-based random access resources and the common random access resources using shared preambles, a relationship between random access occasions RO of the slice-based random access resources and random access occasions RO of the common random access resources being one of the following: the slice-based random access resources and the common random access resources using time division random access occasions RO; the slice-based random access resources and the common random access resources using frequency division random access occasions RO; or, the slice-based random access resources and the common random access resources using frequency division and time division random access occasions RO.

In some exemplary embodiments, the random access configuration information includes information indicating that the random access resources are used for the slice-based random access resources and/or the common random access resources, a part of the slice-based random access resources and/or a part of the common random access resources using shared random access occasions RO, and the part of the slice-based random access resources and/or the part of the common random access resources using various preambles; another part of the slice-based random access resources and/or another part of the common random access resources using different random access occasions RO, and the another part of the slice-based random access resources and/or the another part of the common random access resources using shared preambles.

Since the various functional modules of the terminal devices of the exemplary embodiments of the present disclosure correspond to the steps of the exemplary embodiments of the random access resources isolation method described above, for details not disclosed in the terminal device embodiment of the present disclosure, please refer to the embodiments of the random access resources isolation method of the present disclosure described above.

Fig. 9 shows a schematic diagram of structures of a network equipment according to some exemplary embodiments of the present disclosure.

As shown in Fig. 9, network equipment 900 includes: configuration information sending module 910, configured to send random access configuration information, the random access configuration information being configuration information for random access resources of at least one cell, the random access configuration information including information indicating that the random access resources are used for slice-based random access and/or common random access.

In some exemplary embodiments, the random access configuration information is used for a terminal device located in the cell to determine random access resources to be used based on slice related parameters and the random access configuration information.

In some exemplary embodiments, the slice related parameters include: at least one of single network slice selection assistance information S-NSSAI, slice group and no slicing related configuration information.

In some exemplary embodiments, the slice group may be determined in one of the following ways: the network equipment notifying the terminal device of the relationship between S-NSSAI and slice group through non-access stratum NAS signaling; using slice/service type SST as slice group; or, using user access control UAC as slice group.

In some exemplary embodiments, the random access configuration information includes information indicating that the random access resources are used for the slice-based random access resources and/or the common random access resources, the slice-based random access resources and the common random access resources using shared random access occasions RO, as well as preambles of the slice-based random access resources and preambles of the common random access resources are various.

In some exemplary embodiments, the random access configuration information further includes: preambles associated with the slice-based random access resources and/or preambles associated with the common random access resources.

In some exemplary embodiments, the common random access resources are corresponding to: R contention based preambles for a common 4-step random access and/or Q contention based preambles for a common 2-step random access; the slice-based random access resources are corresponding to: R1 contention based 4-step random access preambles for network slice and/or Q1 contention based 2-step random access preambles for network slice.

In some exemplary embodiments, when N<1, a synchronous signal/PBCH block SSB is mapped to 1/N random access occasions RO, and the R preambles are with consecutive indices started from preamble index 0; the Q preambles are with consecutive indices started from preamble index R, the R1 preambles are with consecutive indices started from preamble index R+Q, and the Q1 preambles are with consecutive indices started from preamble index R+Q+R1;

when N>=1, a SSB is mapped to 1/N random access occasions RO, and the R preambles are with consecutive indices started from preamble index $n \cdot N_{preamble}^{total}\big/N$ ; the Q preambles are with consecutive indices started from preamble index $n \cdot N_{preamble}^{total}\big/N$+R , and the R1 preambles are with consecutive indices started from preamble index $n \cdot N_{preamble}^{total}\big/N$+R+Q , the Q1 preambles are with consecutive indices started from preamble index $n \cdot N_{preamble}^{total}\big/N$ +R+Q+R1, where $N_{preamble}^{total}$ represents a total number of available preambles for random access, $0 \leq n \leq N$ - 1.

In some exemplary embodiments, the random access configuration information includes information indicating that the random access resources are for the slice-based random access resources and/or the common random access resources, the slice-based random access resources and the common random access resources using shared preambles, a relationship between random access occasions RO of the slice-based random access resources and random access occasions RO of the common random access resources being one of the following: the slice-based random access resources and the common random access resources using time division random access occasions RO; the slice-based random access resources and the common random access resources using frequency division random access occasions RO; or, the slice-based random access resources and the common random access resources using frequency division and time division random access occasions RO.

In some exemplary embodiments, the random access configuration information includes information indicating that the random access resources are used for the slice-based random access resources and/or the common random access resources, a part of the slice-based random access resources and/or a part of the common random access resources using shared random access occasions RO, and the part of the slice-based random access resources and/or the part of the common random access resources using various preambles; another part of the slice-based random access resources and/or another part of the common random access resources using different random access occasions RO, and the another part of the slice-based random access resources and/or the another part of the common random access resources using shared preambles.

Since the various functional modules of the network equipments of the exemplary embodiments of the present disclosure correspond to the steps of the exemplary embodiments of the random access resources isolation method described above, for details not disclosed in the network equipment embodiment of the present disclosure, please refer to the embodiments of the random access resources isolation method of the present disclosure described above.

It should be noted that although several modules or units of the devices for the execution of the actions are mentioned in detail above, such a division is not mandatory. In fact, according to the embodiments of the present disclosure, the features and functions of two or more modules or units described above can be embodied in one module or unit. Conversely, the features and functions of one module or unit described above can be further divided into being embodied by multiple modules or units.

Furthermore, although the steps of the methods of the present disclosure are described in the accompanying drawings in a particular order, it is not required or implied that the steps must be performed in that particular order or that all of the steps shown must be performed to achieve desired results. Additionally or alternatively, certain steps may be omitted, multiple steps may be combined into one step to execute and/or one step may be divided into multiple steps to execute.

It is easy for one skilled in the art to understand from the descriptions of the embodiments above that the example embodiments described herein may be implemented by software or by software in combination with necessary hardware. Therefore, the technical solutions according to the present disclosure may be embodied in the form of a software product which may be stored on a nonvolatile storage medium (may be a CD-ROM, a USB flash drive, a mobile hard disk, etc.) or on a network, and includes instructions for enabling a computing device (may be a personal computer, a server, a mobile terminal, or a network equipment, etc.) to perform the methods according to the embodiments of the present disclosure.

In exemplary embodiments of the disclosure, a computer storage medium capable of implementing the methods described above is also provided. A program product capable of implementing the methods described above of the specification is stored thereon. In some possible embodiments, aspects of the present disclosure may also be realized in the form of a program product including program codes which, when run on a terminal device, is used to cause the terminal device to perform the steps described in the " exemplary methods" section above of the specification according to the exemplary embodiments of the disclosure.

The above-mentioned program product may be in the form of a portable compact disc read-only memory (CD-ROM) and include program codes that can be run on a terminal device, such as a personal computer. However, the program product of this present disclosure is not limited to this, and in this document, the readable storage medium may be any tangible medium containing or storing a program that may be used by or in combination with an instruction execution system, device or apparatus.

The above-mentioned program product may be employed as any combination of one or more readable medium. The readable medium may be a readable signal medium or a readable storage medium. The readable storage medium may, for example, be but not limited to systems, devices, or apparatus that are electrical, magnetic, optical, electromagnetic, infrared, or semiconductor, or any combination thereof. More specific examples (not an exhaustive list) of readable storage media include: electrical connections with one or more wires, portable disks, hard disks, random access memory (RAM), read-only memory (ROM), erasable programmable read-only memory (EPROM or flash memory), optical fibers, compact disc read-only memory (CD-ROM), optical storage devices, magnetic storage devices, or any combination of the above as appropriate.

Computer readable signal medium may include data signals transmitted in a base band or as part of a carrier in which readable program codes are carried. Such transmitted data signals may be employed in a variety of forms including, but not limited to, electromagnetic signals, optical signals, or any suitable combination of the above. The readable signal medium may also be any readable medium other than readable storage medium that may send, transmit or transmit programs for use by or in conjunction with an instruction execution system, device or apparatus.

The program codes contained on the readable medium may be transmitted by any suitable medium, including but not limited to wireless, wired, optical cable, RF, etc., or any suitable combination thereof.

The program codes for performing operations of the present disclosure may be written in any combination of one or more programming languages, including object-oriented programming languages such as Java, C++, etc., and also including conventional procedural programming languages such as the "C" language or similar programming languages. The program codes may be executed entirely on a user's computing device, partially on a user's computing device, as an independent software package, partially on a user's computing device and partially on a remote computing device, or entirely on a remote computing device or a server. In the case of a remote computing device, the remote computing device may be connected to the user's computing device through any kind of network, including a local area network (LAN) or a wide area network (WAN), or may be connected to an external computing device (for example, through the Internet using an Internet service provider).

Further, in the exemplary embodiments of the present disclosure, an electronic device capable of implementing the above-mentioned methods is also provided.

One skilled in the art will understand that various aspects of the present disclosure may be implemented as systems, methods or program products. Therefore, various aspects of the present disclosure may be implemented in the following forms: a complete hardware implementation, a complete software implementation (including firmware, microcode, etc.), or a combined implementation of hardware and software aspects, which may be collectively referred to as "circuit", "module" or "system".

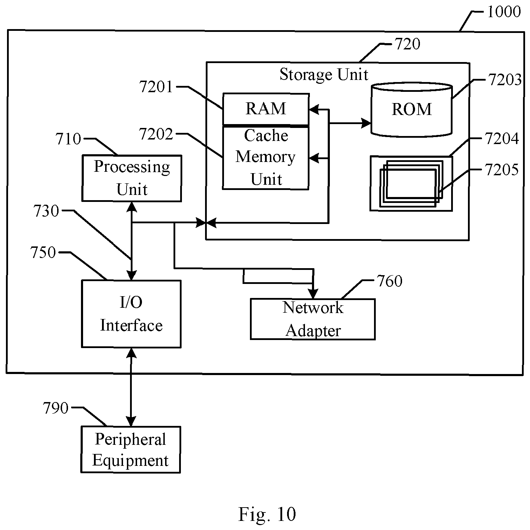

An electronic device 1000 according to this embodiment of the disclosure is described below with reference to Fig. 10. The electronic device 1000 shown in Fig. 10 is only an example and should not be used to place any limitations on the functionality and scope of use of the embodiments of the present disclosure.

As shown in Fig. 10, electronic device 1000 is presented in the form of a general computing device. The components of electronic device 1000 may include, but are not limited to, above-mentioned at least one of processing units 710, above-mentioned at least one of storage units 720, and a bus 730 connecting different system components, including storage unit 720 and processing unit 710.

Wherein, the above-mentioned storage units store program codes which may be executed by the processing unit 710, thereby causing the processing unit 710 to perform the steps described in the "exemplary methods" section above of the specification in accordance with the various exemplary embodiments of the present disclosure. For example, the processing unit 710 may perform the steps described in Fig. 2: S210, receiving random access configuration information sent by a network equipment, the random access configuration information including information indicating that the random access resources are used for slice-based random access and/or common random access; S220, determining random access resources to be used based on relevant parameters and the random access configuration information; S230, initiating a random access request based on the random access resources to be used.

Exemplarily, the processing unit 710 may also perform the random access resources isolation method of the embodiments in the manner described above.

Storage unit 720 may include a readable medium in the form of a volatile storage unit, such as a random access memory (RAM) unit 7201 and/or a cache memory unit 7202, and may further include a read-only memory cell (ROM) unit 7203.

Storage unit 720 may also include a program/utility 7204 having a set of (at least one) program modules 7205, such program modules 7205 including but not limited to: an operating system, one or more applications, other program modules, and program data, and each of these examples or some combination may include an implementation of a network environment.

Bus 730 may be one or more of several types of bus structures including a memory unit bus or memory unit controller, a peripheral bus, a graphics acceleration port, a processing unit, or a local bus using any of several bus structures.

Electronic device 1000 may also communicate with one or more peripheral equipment 790 (such as keyboards, pointing devices, Bluetooth devices, etc.), and may also communicate with one or more devices that enable the user to interact with the electronic device 1000, and/or with any device (such as routers, modems, etc.) that enable the electronic device 1000 to communicate with one or more other computing devices. Such communication can be carried out through an input/output (I/O) interface 750. Moreover, electronic device 1000 may also communicate with one or more networks (such as a local area network (LAN), a wide area network (WAN) and/or a common network, such as the Internet) through a network adapter 760. As shown in the figure, network adapter 760 communicates with other modules of electronic device 1000 through bus 730. It should be understood that, although not shown in the figure, other hardware and/or software modules may be used in conjunction with electronic device 1000, including but not limited to: microcode, device drivers, redundant processing units, external disk drive arrays, RAID systems, tape drives, and data backup storage systems.

It is easy for one skilled in the art to understand from the descriptions of the embodiments above that the example embodiments described herein may be implemented by software or by software in combination with necessary hardware. Therefore, the technical solutions according to the present disclosure may be embodied in the form of a software product, which may be stored on a nonvolatile storage medium (may be a CD-ROM, a USB flash drive, a mobile hard disk, etc.) or on a network and includes instructions for enabling a computing device (may be a personal computer, a server, a terminal device, or a network equipment, etc.) to execute the methods according to the embodiments of the present disclosure."

Further, the above-mentioned accompanying drawings are merely for illustrative purposes and not for restrictive purposes of the processing included in the methods according to the exemplary embodiments of the present disclosure. It is easy to understand that the processing shown in the above-mentioned accompanying drawings does not indicate or restrict a chronological order of the processing. Further, it is easy to understand that the processing may be performed synchronously or asynchronously in, for example, multiple modules.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the following claims.

**Claims**

1. A random access resources isolation method for radio access network slicing, comprising:
   receiving, by a terminal device, random access configuration information sent by a network equipment, the random access configuration information comprising information indicating that the random access resources are used for slice-based random access and/or common random access.

2. The method according to claim 1, wherein, the method further comprises:

   determining, by the terminal device, random access resources to be used based on relevant parameters and the random access configuration information;
   initiating, by the terminal device, a random access request based on the random access resources to be used.

3. The method according to claim 2, wherein, the relevant parameters comprise:
   at least one of single network slice selection assistance information S-NSSAI, slice group and no slicing related configuration information.

4. The method according to claim 3, wherein, the slice group can be determined in one of the following ways:

notifying, by the network equipment, the terminal device of the relationship between S-NSSAI and slice group through non-access stratum NAS signaling;
using slice/service type SST as slice group; or
using user access control UAC as slice group.

5. The method according to claim 1, wherein, the random access configuration information comprises information indicating that the random access resources are used for the slice-based random access resources and/or the common random access resources, the slice-based random access resources and the common random access resources using shared random access occasions RO, as well as preambles of the slice-based random access resources and preambles of the common random access resources are various.

6. The method according to claim 5, wherein, the random access configuration information further comprises: preambles associated with the slice-based random access resources and/or preambles associated with the common random access resources.

7. The method according to claim 6, wherein, the common random access resources are corresponding to: R contention based preambles for a common 4-step random access and/or Q contention based preambles for a common 2-step random access;
the slice-based random access resources are corresponding to: R1 contention based 4-step random access preambles for network slice and/or Q1 contention based 2-step random access preambles for network slice.

8. The method according to claim 7, wherein,

when N<1, a synchronous signal/PBCH block SSB is mapped to 1/N random access occasions RO, and the R preambles are with consecutive indices started from preamble index 0; the Q preambles are with consecutive indices started from preamble index R, the R1 preambles are with consecutive indices started from preamble index R+Q, and the Q1 preambles are with consecutive indices started from preamble index R+Q+R1;

when N>=1, a SSB is mapped to 1/N random access occasions RO, and the R preambles are with consecutive indices started from preamble index $n \cdot N_{preamble}^{total} / N$ ; the Q preambles are with consecutive indices started from preamble index $n \cdot N_{preamble}^{total} / N + R$ , the R1 preambles are with consecutive indices started from preamble index $n \cdot N_{preamble}^{total} / N + R + Q$ , and the Q1 preambles are with consecutive indices started from preamble index $n \cdot N_{preamble}^{total} / N + R + Q + R1$ , wherein, $N_{preamble}^{total}$ represents a total number of available preambles for random access, $0 \leq n \leq N-1$.

9. The method according to claim 1, wherein, the random access configuration information comprises information indicating that the random access resources are for the slice-based random access resources and/or the common random access resources, the slice-based random access resources and the common random access resources using shared preambles, a relationship between random access occasions RO of the slice-based random access resources and random access occasions RO of the common random access resources being one of the following:

the slice-based random access resources and the common random access resources using time division random access occasions RO;
the slice-based random access resources and the common random access resources using frequency division random access occasions RO; or
the slice-based random access resources and the common random access resources using frequency division and time division random access occasions RO.

10. The method according to claim 1, wherein, the random access configuration information comprises information indicating that the random access resources are used for the slice-based random access resources and/or the common random access resources, a part of the slice-based random access resources and/or a part of the common random access resources using shared random access occasions RO, and the part of the slice-based random access resources and/or the part of the common random access resources using various preambles;
another part of the slice-based random access resources and/or another part of the common random access resources using different random access occasions RO, and the another part of the slice-based random access resources and/or the another part of the common random access resources using shared preambles.

11. A random access resources isolation method for radio access network slicing, comprising:

sending by a network equipment, random access configuration information, the random access configuration information being configuration information for random access resources of at least one cell, the random access configuration information comprising information indicating that the random access resources are used for slice-based random access and/or common random access.

12. The method according to claim 11, wherein, the random access configuration information is used for a terminal device located in the cell to determine random access resources to be used based on slice related parameters and the random access configuration information.

13. The method according to claim 12, wherein, the slice related parameters comprise:

at least one of single network slice selection assistance information S-NSSAI, slice group and no slicing related configuration information.

14. The method according to claim 13, wherein, the slice group can be determined in one of the following ways:

notifying, by the network equipment, the terminal device of the relationship between S-NSSAI and slice group through non-access stratum NAS signaling;
using slice/service type SST as slice group; or
using user access control UAC as slice group.

15. The method according to claim 11, wherein, the random access configuration information comprises information indicating that the random access resources are used for the slice-based random access resources and/or the common random access resources, the slice-based random access resources and the common random access resources using shared random access occasions RO, as well as preambles of the slice-based random access resources and preambles of the common random access resources are various.

16. The method according to claim 15, wherein, the random access configuration information further comprises: preambles associated with the slice-based random access resources and/or preambles associated with the common random access resources.

17. The method according to claim 16, wherein, the common random access resources are corresponding to: R contention based preambles for a common 4-step random access and/or Q contention based preambles for a common 2-step random access;
the slice-based random access resources are corresponding to: R1 contention based 4-step random access preambles for network slice and/or Q1 contention based 2-step random access preambles for network slice.

18. The method according to claim 17, wherein,

when N<1, a synchronous signal/PBCH block SSB is mapped to 1/N random access occasions RO, and the R preambles are with consecutive indices started from preamble index 0; the Q preambles are with consecutive indices started from preamble index R, the R1 preambles are with consecutive indices started from preamble index R+Q, and the Q1 preambles are with consecutive indices started from preamble index R+Q+R1;
when N>=1, a SSB is mapped to 1/N random access occasions RO, and the R preambles are with consecutive indices started from preamble index $n \cdot N_{preamble}^{total}/N$, the Q preambles are with consecutive indices started from preamble index $n \cdot N_{preamble}^{total}/N$+R, and the R1 preambles are with consecutive indices started from preamble index $n \cdot N_{preamble}^{total}/N$+R+Q, the Q1 preambles are with consecutive indices started from preamble index $n \cdot N_{preamble}^{total}/N$ +R+Q+R1, wherein, $N_{preamble}^{total}$ represents a total number of available preambles for random access, $0 \le n \le N$ -1.

19. The method according to claim 11, wherein, the random access configuration information comprises information indicating that the random access resources are for the slice-based random access resources and/or the common random access resources, the slice-based random access resources and the common random access resources using shared preambles, a relationship between random access occasions RO of the slice-based random access resources and random access occasions RO of the common random access resources being one of the following:

the slice-based random access resources and the common random access resources using time division random access occasions RO;
the slice-based random access resources and the common random access resources using frequency division random access occasions RO; or

the slice-based random access resources and the common random access resources using frequency division and time division random access occasions RO.

20. The method according to claim 11, wherein, the random access configuration information comprises information indicating that the random access resources are used for the slice-based random access resources and/or the common random access resources, a part of the slice-based random access resources and/or a part of the common random access resources using shared random access occasions RO, and the part of the slice-based random access resources and/or the part of the common random access resources using various preambles; another part of the slice-based random access resources and/or another part of the common random access resources using different random access occasions RO, and the another part of the slice-based random access resources and/or the another part of the common random access resources using shared preambles.

21. A terminal device, comprising:
receiving module, configured to receive random access configuration information sent by a network equipment, the random access configuration information being configuration information for random access resources of a cell where the terminal device is located, the random access configuration information comprising information indicating that the random access resources are used for slice-based random access and/or common random access.

22. A network equipment, comprising:
configuration information sending module, configured to send random access configuration information, the random access configuration information being configuration information for random access resources of at least one cell, the random access configuration information comprising information indicating that the random access resources are used for slice-based random access and/or common random access.

23. A computer readable medium, with computer programs stored on, wherein the computer programs are executed by a processor, making the programs able to execute a random access resources isolation method according to any one of claims 1 to 20.

24. An electronic device, comprising:

one or more processors;
a memory for storing one or more programs, when the executable one or more programs are executed by the processor, making the one or more processors able to execute a random access resources isolation method according to any one of claims 1 to 20.

100

110

120

120

Fig. 1

┌─110
Network
Equipment

┌─120
Terminal
Device

S210.Random Access Configuration Information

S220.Determining Random Access
Resources to be Used Based on
Relevant Parameters and the Random
Access Configuration Information

S230. Initiating a Random Access
Request Based on the Random
Access Resources to be Used

Fig. 2

Preambles | R | Q | R1 | Q1 | Reserved

Common RA Resources

Slice-Based RA Resources

Fig. 3

Frequency Division

Frequency

Common RA RO

Slice RA RO

Time

Fig. 4

Fig. 5

Fig. 6

Frequency

Time Division+Frequency
Division

Common RA
RO+Slice 1 RA
RO

Slice 2 RA RO

Time

Fig. 7

800

Terminal Device

Receiving Module                810

Access Processing
Module                          820

Fig. 8

900

Network Equipment

Configuration
Information Sending
Module                          910

Fig. 9

Fig. 10

# EP 4 383 916 A1

| INTERNATIONAL SEARCH REPORT | International application No. |
|---|---|
| | **PCT/CN2022/107701** |

**A.   CLASSIFICATION OF SUBJECT MATTER**

H04W 74/08(2009.01)i

According to International Patent Classification (IPC) or to both national classification and IPC

**B.   FIELDS SEARCHED**

Minimum documentation searched (classification system followed by classification symbols)

H04W74/-

Documentation searched other than minimum documentation to the extent that such documents are included in the fields searched

Electronic data base consulted during the international search (name of data base and, where practicable, search terms used)

CNABS; CNTXT; VEN; DWPI; EPTXT; USTXT; WOTXT; 3GPP; CNKI; IEEE: 网络, 切片, 组, 随机接入, 配置, 分配, 公共, 通用, 资源, 前导码, 前导序列, 时分, 频分, 时域, 频域, 时机, 隔离, 共享, 不同, 区分, network, slice, group, random access, resource, RACH, NSSAI, SST, preamble, occasion, RO, time, frequency, domain, division, common, particular, exclusive

**C.   DOCUMENTS CONSIDERED TO BE RELEVANT**

| Category* | Citation of document, with indication, where appropriate, of the relevant passages | Relevant to claim No. |
|---|---|---|
| X | WO 2021093173 A1 (ZTE CORP.) 20 May 2021 (2021-05-20)<br>description, page 17, paragraphs 3-5, page 21, paragraph 4-page 28, paragraph 2 | 1-24 |
| X | CN 111448841 A (BEIJING XIAOMI MOBILE SOFTWARE CO., LTD.) 24 July 2020 (2020-07-24)<br>description, paragraphs 0151-0172 and 0209 | 1-24 |
| X | CN 112913319 A (BEIJING XIAOMI MOBILE SOFTWARE CO., LTD.) 04 June 2021 (2021-06-04)<br>see description, paragraphs 0055-0083 | 1-24 |
| A | CN 108633101 A (HUAWEI TECHNOLOGIES CO., LTD.) 09 October 2018 (2018-10-09)<br>entire document | 1-24 |
| A | CN 107872884 A (CHINA ACADEMY OF TELECOMMUNICATIONS TECHNOLOGY) 03 April 2018 (2018-04-03)<br>entire document | 1-24 |
| A | WO 2021028048 A1 (NOKIA TECHNOLOGIES OY) 18 February 2021 (2021-02-18)<br>entire document | 1-24 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 October 2022** | **25 October 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<table>
<tr><td colspan="3" align="center">INTERNATIONAL SEARCH REPORT<br>Information on patent family members</td><td colspan="2">International application No.<br><br>**PCT/CN2022/107701**</td></tr>
</table>

| Patent document cited in search report | | | Publication date (day/month/year) | Patent family member(s) | | | Publication date (day/month/year) |
|---|---|---|---|---|---|---|---|
| WO | 2021093173 | A1 | 20 May 2021 | AU | 2020381558 | A1 | 11 August 2022 |
| CN | 111448841 | A | 24 July 2020 | WO | 2021179130 | A1 | 16 September 2021 |
| CN | 112913319 | A | 04 June 2021 | | None | | |
| CN | 108633101 | A | 09 October 2018 | US | 2020022038 | A1 | 16 January 2020 |
| | | | | EP | 3598833 | A1 | 22 January 2020 |
| | | | | EP | 4057756 | A1 | 14 September 2022 |
| | | | | US | 2022225187 | A1 | 14 July 2022 |
| | | | | WO | 2018171756 | A1 | 27 September 2018 |
| | | | | IN | 201937040078 | A | 13 December 2019 |
| | | | | EP | 3598833 | A4 | 18 March 2020 |
| | | | | CN | 108633101 | B | 12 January 2021 |
| | | | | EP | 3598833 | B1 | 08 December 2021 |
| | | | | US | 11265779 | B2 | 01 March 2022 |
| CN | 107872884 | A | 03 April 2018 | WO | 2018054099 | A1 | 29 March 2018 |
| WO | 2021028048 | A1 | 18 February 2021 | US | 2022295361 | A1 | 15 September 2022 |
| | | | | EP | 4014544 | A1 | 22 June 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110898462X